# EUROPEAN PATENT APPLICATION

(11) **EP 1 496 029 A2**
(43) Date of publication of application: **12.01.2005**
(21) Application number: 04103282.2
(22) Date of filing: 09.07.2004
(51) Int. Cl.: C04B 28/02, C04B 22/00

(54) **Cement grout made using salt water**

(30) Priority: 11.07.2003 GB 3163862
(71) Applicant: COMPAGNIE DU SOL, 92000 Nanterre (FR)
(72) Inventor: Bissery, Paul, 92000, NANTERRE (FR)
(74) Representative: Nevant, Marc

(57) **Abstract**

The invention relates to a grout which consists of (i) cement, (ii) a compound selected from the group consisting of fly ash, pozzolan, ground granulated blast furnace slag and mixtures thereof, (iii) a retarder, and (iv) brine or water saturated with sodium chloride.

## Description

The present invention relates to a grout made using salt water (brine) and to a method which makes use of said grout.

The invention can be applied in particular in the field of construction.

Problems may be encountered when a cement grout needs to be used underwater, especially in salty water, mainly due to the fact that the rheological properties of the grout may be adversely affected by salt.

In such a situation, it is further desired that the need to remove large amounts of water be avoided, since the salty water must be processed before disposal.

It would therefore be advantageous to obtain a grout whose rheological properties remain unchanged, even after being in contact with salty water.

It would also be advantageous to prepare the grout with salty water which otherwise would have to be removed and disposed of before construction work can begin and during construction works.

It has now been unexpectedly found that a specific powder mixture based on cement can be used in the preparation of a grout which meets the above mentioned requirements.

Thus, according to a first aspect, the invention relates to a grout consisting of (i) cement, (ii) a compound selected from the group consisting of fly ash, pozzolan, ground granulated blast furnace slag and mixtures thereof, (iii) a retarder, and (iv) brine.

There is no specific restriction concerning the type of cement which can be used in the present invention. It appears that any commercially available cement can be used to prepare grout according to the invention. Examples of cements which are suitable thus include CEM I, CEM II, CEM III, CEM IV and CEM V cements and mixtures thereof.

Fly ash is generally obtained as a waste material arising from incineration or power plants. Pozzolan is also known as volcanic ash. Both types of ash, which can be pulverized, are generally available in the form of dry or humid powders. In the case where the fly ash or pozzolan is/are used in the form of wet powders, sodium chloride should be added in an amount sufficient to saturate the water present in the fly ash or pozzolan used. The sodium chloride will be added at the time of production of the grout using brine.

The nature of the ground granulated blast-furnace slag (ggbs), which is also commercially available, is not particularly critical, but it is preferable that it be of the basic type and that the CaO/SiO₂ weight ratio be between about 1.10 and about 1.35. A material which comprises 33 to 40% SiO₂, 8 to 16% Al₂O₃, 39 to 44% CaO, and 4 to 9% MgO (in percentages by weight) as main components can be cited as an example of a slag which can be used within the context of the present invention. It is also preferable that the chemical modulus of the slag (CaO content (%) x Al₂O₃ content (%)) be greater than about 500. Furthermore, the slag preferably has a Blaine finesse (or specific surface area) of about 2,500 to about 5,000 cm²/g.

Preferably, the weight ratio between (i) the cement and (ii) the ash, pozzolan and/or slag, lies between 0.02 and 1. In the case where wet ash or pozzolan is used, this weight ratio is calculated on the basis of the equivalent amount of dry ash or pozzolan which is present, determined by subtracting the weight of water known to be present.

The retarder which can be used in the grout of the invention can be any retarder known to the skilled man, for example a lignosulphonate retarder or a gluconate retarder such as sodium gluconate. The amount of retarder, when used as a liquid, depends on the workability time and amount of cement, as detailed below.

The grout according to the invention can be prepared by mixing all four distinct components (i), (ii), (iii) and (iv) as identified above, in one go.

Alternatively, a powder pre-mixture can be prepared consisting of (i) cement, (ii) fly ash or pozzolan and (iii) retarder. In a second step, brine (iv) is added to give the required grout.

The grout according to the present invention can be used above in a fresh water context, in the presence of water saturated with salts, as well as in the open air. In the case where the grout according to invention is used for underwater works where the water is fresh water, it is not necessary to saturate the fresh water with sodium chloride before using the grout.

Amongst other potential applications for the grout according to the present invention, the said grout can be used to fill in voids in old salt mines, making use of the water saturated in salt which fills these mines after mining work in them has ceased.

The grout of the invention can also be used to fill in large voids, which are themselves initially filled with fresh water. In this context, the water used for preparing the grout must be saturated with sodium chloride.

The grout according to invention can also be used to fill in disused underground pipes; this is particularly useful in cases where the said pipes are long and difficult to access from the surface.

In cases where the work (construction, filling, reinforcement) takes place in a context where salt water is present, the system according to the present invention advantageously enables the salty water found on the site to be used in the preparation of the grout. The problem of having to dispose of the salty water present in the site where the work will take place, before such work can begin, is also avoided. In such context, it would be advantageous to prepare a powder pre-mixture from components (i) to (iii) above, and then prepare the grout on site from this pre-mixture of components (i), (ii) and (iii) by combining this pre-mixture with brine.

Typically, the grout according to the invention contains, per cubic meter:
- from about 20 to about 500 kg of cement;
- from about 500 to about 1000 kg of component (ii);
- from about 1 to about 5 litres of retarder;
- from about 300 to about 500 litres of brine or water saturated with NaCl.

The grout according to the invention exhibits at least one of the following properties:
- it has a plastic viscosity in the range of about 75 to about 150 mPa.s;
- it has a Marsh viscosity in the range of about 100 to about 200 s;
- it has an initial shear strength in the range of 0 to about 5 Pa;
- it has a workability time in the range of about 1h30 to about 3h.

The plastic viscosity is determined with a viscosimeter marketed by Fann (model 35SA), according to API (American Petroleum Institute) standard 13B. It is expressed in Pa.s.

The Marsh viscosity is measured with a Marsh funnel, according to API standards. The method consists in filling the funnel and measuring the flow of 946 ml of fluid. It is expressed in seconds.

The shear strength is measured with a Vane test cohesimeter marketed by Wikeham Farrance (model 23500). It is expressed in Pa.

The workability time is the time during which the grout can be used. It corresponds to the time which is needed for the grout to attain a shear strength of 100 Pa. It is also measured with a Vane test cohesimeter, and expressed in hours.

The grout of the invention thus has a very low initial shear strength, very good flow properties with an angle of slope (angle of repose) near zero and a good workability time. This is especially advantageous for the filling of large voids where the grout has to reach sites far away from the grouting point. Also, the large excess of salt with respect to cement does not disturb the cement setting and delay the increase of cohesion. Furthermore, there is no need to use large amounts of retarder in order to obtain good workability.

By comparison, a grout prepared a powder mixture containing elements (i), (ii) and (iii) as described above, but converted into grout by mixing with fresh water (not brine), exhibits a high initial shear strength (at least 30 Pa) and a short workability time (less than 30 min).

Therefore, it has been found that the above-listed very useful properties of the grout according to the present invention can only be obtained if this grout is prepared using mixing water which is saturated in sodium chloride.

The fact that such advantageous properties can be obtained using brine to prepare the grout is a quite unexpected phenomenon for the skilled person in the field of concrete technology. In this technical field, it would normally be assumed that the use of the large excess of salt with respect to the cement, would have a negative influence on the setting of the cement and on the increase of shear strength of the grout. However, contrary to expectations, the presence of a large amount of salt does not disturb the setting of the grout and it also enables the increase in the shear strength of the grout to be delayed.

The invention will now be described with reference to the following examples.

### EXAMPLES

### Example 1: Preparation of a grout

| 1 m³ of grout is prepared using the following components: | |
|---|---|
| Brine, kg | 460 |
| Corresponding to brine, I | 385 |
| Cement¹, kg | 50 |
| Wet pulverized fly ashes (PFA)², kg | 1000 |
| **Salt for PFA water, kg** | **85** |
| Lignosulphonate³, I | 1 to 2 |

| | |
|---|---|
| 1 : product marketed under the name CEM I 42.5 N by Castle Cement | |
| 2: Wet fly ashes delivered with 22% water content (marketed by Feedlers Ferry) | |
| 3: product marketed under the name C6 FF by SÜD CHEMIE | |

### Example 2: Preparation of grout by different methods

The examples below illustrate the preparation of grout by different methods.

### Example 2a: "One shot" method using dry ash

In this method, the grout is prepared in one go using the following components:

| | |
|---|---|
| Brine, litres | 605 |
| Cement¹, kg | 50 |
| Dry ash², kg | 780 |
| Lignosulphonate³, litres | 1 to 2 |

| | |
|---|---|
| 1 : (Cement as used above in Example 1) | |
| 2: Dry fly ashes marketed by Feedlers Ferry | |
| 3: (Lignosulphonate as used above in Example 1) | |

### Example 2b: "One shot" method using wet ash

In this method, the grout is prepared in one go using the following components:

| | |
|---|---|
| Brine, litres | 385 |
| Cement¹, kg | 50 |
| Wet ash², kg | 1000 (dry ash 780; water 220) |
| Salt used for saturating water added to ash, kg | 85 |
| Lignosulphonate³, litres | 1 to 2 |

| | |
|---|---|
| 1 : (Cement as used above in Example 1) | |
| 2: (Wet ash as used above in Example 1) | |
| 3: (Lignosulphonate as used above in Example 1) | |

### Example 2c: Method in two stages

In this method, in a first step, a powder pre-mixture is prepared containing (i) cement, (ii) fly ash, and (iii) retarder. In a second step, this pre-mixture is mixed with brine.

### Composition of powder-pre-mixture

| Component | Amount by weight relative to cement (=1) |
|---|---|
| Cement¹ | 1.000 |
| Dry ash² | 15.6 |
| Lignosulphonate³ | 0.02 |

| | |
|---|---|
| 1 : (Cement as used above in Example 1) | |
| 2: (Dry fly ashes as used above in Example 2a) | |
| 3: Lignosulfonate in powder C12 type marketed by SÜD CHEMIE | |

### Combination of pre-mixture and brine

After the pre-mixture defined in the above table is obtained, a grout is obtained by mixing with brine as follows:

| | |
|---|---|
| Brine, litres | 605 |
| Powder pre-mixture as defined in preceding table, kg | 831 |

### Results

The grout obtained in the above example 2c has the following technical characteristics:
- it has a plastic viscosity of 75 mPa.s;
- it has a Marsh viscosity of 100 s;
- it has an initial shear strength of 4 Pa;
- it has a workability time of about 3h.

### Comparative Example

By way of comparison, a grout was prepared according to the method of example 2c above, but using fresh water as component (iv) instead of salt water.

The following results were obtained:
- plastic viscosity of 150 mPa.s;
- Marsh viscosity impossible to measure;
- initial shear strength of 50 Pa;
- workability time less than 30 minutes.

## Claims

1. A grout consisting of (i) cement, (ii) a compound selected from the group consisting of fly ash, pozzolan, ground granulated blast furnace slag and mixtures thereof, (iii) a retarder, and (iv) brine or water saturated with sodium chloride.

2. The grout according to claim 1, in which the cement is selected from CEM I, CEM II, CEM III , CEM IV and CEM V cements and mixtures thereof.

3. The grout according to claim 1 or 2, in which fly ash or pozzolan are added in a wet form.

4. The grout according to claim 1 or 2, in which the ground granulated blast-furnace slag has a Blaine finesse of about 2,500 to about 5,000 cm²/g.

5. The grout according to one of claims 1 to 4, in which the weight ratio of component (ii) to the cement (i) is in the range of about 1 to about 50.

6. The grout according to one of claims 1 to 5, in which the retarder is a lignosulphonate retarder or a gluconate retarder.

7. The grout according to claim 7, which contains, per cubic meter:
- from about 20 to about 500 kg of cement;
- from about 500 to about 1000 kg of component (ii);
- from about 1 to about 5 litres of retarder;
- from about 300 to about 500 litres of brine or water saturated with sodium chloride.
